(19) European Patent Office
Europäisches Patentamt
Office européen des brevets

(11) **EP 1 262 268 A1**

(12) **EUROPEAN PATENT APPLICATION**

(43) Date of publication:
**04.12.2002 Bulletin 2002/49**

(51) Int Cl.7: **B23K 7/08**, E21B 7/14,
E21B 29/02

(21) Application number: **02253742.7**

(22) Date of filing: **28.05.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **01.06.2001 US 872641**

(71) Applicant: **Ceramic & Materials processing, Inc.
Clarence, New York 14031 (US)**

(72) Inventors:
• **Hlavacek, Vladimir
Clarence, New York 14031 (US)**
• **Pranda, Pavol
Amherst, New York 14228 (US)**

(74) Representative: **Hartley, Andrew Philip et al
Mathisen, Macara & Co
The Coach House
6-8 Swakeleys Road
Ickenham, Uxbridge UB10 8BZ (GB)**

(54) **High-speed chemical drill**

(57) A high-speed chemical drill (20) for removing portions of a target material (30), comprises: an elongated tube (21) formed of a fuel material; a source (24) of oxidizer; a conduit (26) for establishing a controllable flow of oxidizer from said source through said tube (21); and a sleeve (28) formed of a material containing chlorine and/or fluorine mounted on said tube (21); whereby, when said drill (20) is ignited and used to remove portions of a target material (30), the chlorine and/or fluorine in said sleeve (28) material will react chemically with the target material (30) to form gaseous reaction products.

**Fig. 1**

EP 1 262 268 A1

**Description**

Technical Field

This invention relates generally to the field of chemical drills, and, more particularly, to an improved chemical drill that is capable of drilling holes in, or otherwise removing material from, a wide variety of target materials, such as ferrous and nonferrous alloys, concrete, various ceramic materials, and the like.

Background of Invention

In civilian applications, high-speed chemical cutting is used in cutting, scarfing and lancing of oxidation-resistant materials. In steel mills, cutting is used to scarf large ingots, slabs and billets. Chemical lancing permits rapid and effective piercing of many materials that are difficult to pierce with standard hydrocarbon/oxygen flame technology. These materials include, for example, various irons and steels, firebrick, cinder block, aluminum billets, sand and metal incrustations in castings, and the like. Typical lancing applications include: (a) removal of blast furnace bosh plates, (b) removal of large iron masses (*i.e.*, "salamanders") that are deposited at the base of blast furnace, (c) cleaning of furnace linings, (d) furnace tapping to remove slag, (e) cleaning of soaking pits, (f) removal of ladle skulls, and (g) piercing holes in reinforced concrete walls and floors.

Underwater cutting and/or welding techniques are used in the repair of offshore platforms. These techniques have also been useful during the installation of new offshore structures and undersea pipelines, the installation of hot taps, the repair of dock and harbor facilities, the modification of and addition to underwater structures, the repair of nuclear facilities, and still other applications. Permanent and temporary repairs to holes in ship- and barge-hulls have been performed. Hulls and pontoons of semi-submersible drill ships have also been repaired. Still other applications have included cutting of ship sterns from castings, cutting reinforced concrete under water, underwater ship husbandry operations, salvage and rescue missions, and the like.

The common process used in industry for such cutting is the so-called "lance technology". This process represents one of the oldest commercial uses of oxygen for piercing and cutting holes in hard materials. These materials include practically all ferrous metals and many other materials, such as concrete, slag, rock, and the like. Initially, such lances were simply an elongated length of hollow iron pipe connected at one end to a source of oxygen through an intermediate flow regulator.

Conventional lance technology employs the use of a steel pipe containing steel wires or rods. Oxygen is blown through the pipe at high pressure. The pipe, and the rods therewithin, are ignited at one end, and oxygen-rich gas is blown through the pipe. This oxidizes the pipe and the rods, and produces a hot flame. The discharge end of the lance is held in the cut or hole so that the cutting flame is presented at the distal end of the lance. The flame heats and burns the end of the pipe so that, as the operation proceeds, the pipe is consumed and must be periodically replaced with a new length of pipe. Only a small portion of the oxygen consumed is required by oxidation of the lance itself, but the heat of the burning lance assists the cutting. Once started, the reaction is very vigorous, and usually produces a lot of "splatter" of semi-solid highly-viscous lava-like material outwardly from the discharge end of the lance. If this material accumulates at the bottom of the hole or cut, it creates an obstacle to continued drilling or cutting.

Over the last ten years, there has been renewed interest in oxygen lance techniques, resulting in many improvements in the basic oxygen lance structure. Some of these improvements include the provision of one or more elongated rods within the lance, the mounting of the various component parts relative to each other, specialized configurations for the outer casting and inner rods, and cooperation between the inner rods when received within the outer casing. However, there are not believed to have been any changes in the basic chemistry of the lance process and technology. Iron-containing wires and tubes, and oxygen, remain the basic building blocks of known applications.

Other details of prior art lances, devices and methods are shown and described in U.S. Pats. No. 4,928,757, 4,889,187, 3,570,419, 5,320,174, 3,602,620, 5,575,331, 5,580,515, 3,725,156, 3,751,625, 4,477,060, 4,182,947 and 4,050,680, the aggregate disclosures of which are hereby incorporated by reference.

Disclosure of the Invention

The invention relates to an improved chemical drill for converting the reaction products resulting from the cutting, drilling or piercing operation, to gaseous or very volatile products that can be easily directed away from the bottom of the hole or cut so as to not interfere with ongoing and continuous drilling or cutting operations. In effect, the hole or cut is self-cleaning. This results in the reduction or elimination of heat and mass transfer cutting resistances that were commonly present in the prior art, and, consequently, increases the possible cutting rate by a factor to about two to a factor of about four. The proposed drill particularly effective where deep holes or plunging cuts are necessary. The improved drill makes it possible to cut targets, such as concrete, reinforced concrete, ceramic plates, highly alloyed steel, aluminum blocks, laminated structure, granite and the like, that in the past presented major problems.

With parenthetical reference to the preferred embodiments disclosed herein, merely for purposes of illustration and not by way of limitation, the present invention provides an improved chemical drill (20) for removing portions (*e. g.*, by drilling) of a target material (30). Examples of such target materials include, but are not limited to: ferrous alloys, alloys having an element selected from the group consisting of aluminum, copper, magnesium, titanium, a transition metal (*i.e.*, titanium, niobium, zirconium, hafnium, vanadium and tantalum), tungsten, nickel, cobalt and chromium, concrete, reinforced concrete, aluminum oxide, silicon oxide, calcium oxide, brick, and ceramic materials selected from the group consisting of alumina, silica, zirconia, magnesia, silicon carbide and silicon nitride.

The improved drill broadly includes: an elongated tube (21) formed of a fuel-supplying material; a source (24) of oxidizer; a conduit (26) for establishing a controllable flow of oxidizer from said source through said tube; and a sleeve (28) formed of a material containing chlorine and/or fluorine mounted on said tube, such that, when said drill is ignited and used to remove portions of a target material, the chlorine and/or fluorine in said sleeve material will react chemically with the target material to produce volatile gaseous reaction products, which may be readily directed out of the hole or cut and thereby removing substantial resistance to heat and mass transfer within the hole or cut.

In the preferred embodiment, the sleeve is mounted on the outer surface of said tube. A plurality of wires or rods may be arranged in the tube. The sleeve material may contain polyvinyl chlorine, polytetrafluoroethylene, chlorinated polyvinyl chlorine and/or some other material(s) that will contribute chlorine and/or fluorine to the ongoing reaction. The tube may contain iron.

Accordingly, the general object ofthe invention is to provide an improved chemical drill or cutter.

Another object is to provide a chemical drill or cutter which increases the rate-of-removal of the target material by a factor of from about two to about four times that of known chemical drills.

Another object is to provide an improved high-speed chemical drill that is capable of use with a variety of target materials.

These and other objects and advantages will become apparent from the foregoing and ongoing written specification, the drawings, and the appended claims.

Brief Description of the Drawings

Fig. 1 is a sketch, partly in section and partly in elevation, of the improved chemical drill, this view showing the plastic sleeve as surrounding the steel pipe lance.

Fig. 2 is a plot of equilibrium concentration (left ordinate) and adiabatic temperature (right ordinate) vs. concentrations (n) (abscissa) of lance-and-sleeve combinations of $[nFe + (10-n)C_2Cl_4 +20O_2]$, for the reactions of Example 1.

Fig. 3 is a plot of equilibrium concentrations (left ordinate) and adiabatic temperature (right ordinate) vs. concentrations (n) (abscissa) of lance-and-sleeve combinations of $[nFe + (10-n)C_2F_4 + 20O_2]$, for the reactions of Example 1.

Fig. 4 is a plot of equilibrium concentration (left ordinate) and adiabatic temperature (right ordinate) vs. concentrations (n) (abscissa) of lance-and-sleeve combinations of $[nTi + (10-n)C_2Cl_{14} + 20O_2]$ for the reactions of Example 2.

Fig. 5 is a plot of equilibrium concentration (left ordinate) and adiabatic temperature (right ordinate) vs. concentrations (n) (abscissa) of lance-and-sleeve combinations of $[nTi + (10-n)C2F4 + 20O2]$, for the reactions of Example 2.

Fig. 6 is a plot of equilibrium concentration (left ordinate) and adiabatic temperature (right ordinate) vs. concentrations (n) (abscissa) of lance-and sleeve combinations of $[nAl + (10-n)C_2Cl_4 + 20O_2]$, for the reactions of Example 3.

Fig. 7 is a plot of equilibrium concentration (left ordinate) and adiabatic temperature (right ordinate) vs. concentrations (n) (abscissa) of lance-and-sleeve combinations of $[nAl + (10-n)C_2F_4 + 20O_2]$, for the reactions of Example 3.

Fig. 8 is a plot of equilibrium concentration (ordinate) vs. temperature (abscissa) for $[concrete(3.46CaO + 11.1 SiO_2) + 50O_2 + 14.56Fe]$, for the reactions of Example 5.

Fig. 9 is a plot of equilibrium concentration (ordinate) vs. temperature (abscissa) for $[concrete(3.46CaO + 11.1SiO_2) + 20.01C_2F_4 + 46.3O_2 + 14.56Fe]$, for the reactions shown in Example 5.

Fig. 10 is a plot of equilibrium concentration (ordinate) vs. temperature (abscissa) for $[concrete(3.46CaO + 11.1SiO_2) + 20.01C_2Cl_4 + 47.3O_2 + 14.56Fe]$, for the reactions of Example 5.

Description of the Preferred Embodiments

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (*e.g.*, cross-hatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (*e.g.*, "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

Thermal piercing of concrete or reinforced concrete or highly alloyed steel plates is normally a difficult task. The molten lava of the target material at the tip of the lance provides substantial heat and mass transfer resistance to ongoing drilling or cutting operations. A typical product of thermal penetration of a concrete block by a thermal lance is lava composed of oxides of silicon, calcium, aluminum and iron. The melting point of this mixture, depending on the composition, is between about 1600-1800 °C. The present invention is based on the principle of producing gaseous chemical reaction products, products or components that readily sublimate at low temperatures, or products or components with low boiling points, rather than highly-viscous lava, and directing these gaseous materials out of the hole or cut so as to remove their mass therefrom and to allow continuous cutting or drilling without diminution of penetration efficiency due to accumulations of lava-like materials in the hole or cut.

Several inorganic oxides react with chlorine or fluorine in the presence of carbon to form volatile chlorides or fluorides. These reactions, sometimes also called "carbochlorination" or "carbofluorination" reactions, occur with reasonable reaction rates at 800-1000 °C. At temperatures above 1600 °C, which are typical for a cutting torch, these reactions are very fast.

There are different sources of carbon, chlorine or fluorine that can be utilized to carry out the reaction. A source of carbon could be a carbon jacket surrounding the metallic jacket of the regular lance, a fine powder of carbon that is blown in the cutting spot, or a certain group of organic compounds that decompose at cutting-torch temperatures to elemental carbon. Lower hydrocarbons can be easily pyrolyzed at high temperatures. Lower chlorinated hydrocarbons, such as ethylene trichloride, elemental chlorine, PVC, perchlorinated PVC, or the like, can be used as a source of chlorine. Lower fluorinated hydrocarbons, such as polytetrafluoroethylene (*i.e.*, Teflon®) or other polymers rich on fluorine, can be used as a source of fluorine. It is possible to inject these lower chlorinated or fluorinated hydrocarbons into the torch flame in a gaseous form. Polymers containing chlorine and/or fluorine can be part of the cutting lance body. For example, the body of the cutting lance can be inserted in a Teflon® tube.

After thermal ignition of the modified lance halogenated products are transported to the reaction spot and one or more of the following reactions may take place:

For concrete:

$$SiO_2 + 2C + 2Cl_2 \rightarrow SiCl_4\uparrow + 2CO\uparrow \tag{1}$$

$$SiO_2 + 2C + 4HCl \rightarrow SiCl_4\uparrow + 2CO\uparrow + 2H_2\uparrow \tag{2}$$

$$SiO_2 + 2C + 4HF \rightarrow SiF_4\uparrow + 2CO\uparrow + 2H_2\uparrow \tag{3}$$

$$nSiO_2 + [-CF_2\text{-}CF_2\text{-}]_n \rightarrow nSiF_4\uparrow + 2nCO\uparrow \tag{4}$$

$$CaO + C + Cl_2 \rightarrow CaCl_2\uparrow + CO\uparrow \tag{5}$$

$$CaO + C + 2HCl \rightarrow CaCl_2\uparrow + CO\uparrow + H_2\uparrow \qquad (6)$$

$$2CaO + [-CF_2-CF_2-]_n \rightarrow 2CaF_2\uparrow + 2CO\uparrow \qquad (7)$$

For granite:

Any of chemical reactions (1)-(7) and one or more of the following additional reactions:

$$Al_2O_3 + 3C + 3Cl_2 \rightarrow 2AlCl_3\uparrow + 3CO\uparrow \qquad (8)$$

$$Al_2O_3 + 3C + 6HCl \rightarrow 2AlCl_3\uparrow + 3CO\uparrow + 3H_2\uparrow \qquad (9)$$

$$3 [-CF_2-CF_2-]_n + 2nAl_2O_3 \rightarrow 4nAlF_3\uparrow + 6nCO\uparrow \qquad (10)$$

For iron:

$$2FeO + 2C + 3Cl_2 \rightarrow FeCl_3\uparrow + 2CO\uparrow \qquad (11)$$

$$Fe_2O_3 + 3C + 3Cl_2 \rightarrow 2FeCl_3\uparrow + 3CO\uparrow \qquad (12)$$

$$4nFeO + [-CF_2-CF_2-]_n \rightarrow 4nFeF_3\uparrow + 4nCO\uparrow + 2nC\uparrow \qquad (13)$$

$$2nFe_2O_3 + [-CF_2-CF_2-]_n \rightarrow 4nFeF_3\uparrow + 6nCO\uparrow \qquad (14)$$

For Ni- and Cr-Alloyed steel:

$$NiO + C + Cl_2 \rightarrow NiCl_2\uparrow + CO\uparrow \qquad (15)$$

$$2CrO_3 + 6C + 3Cl_2 \rightarrow 2CrCl_3\uparrow + CO\uparrow \qquad (16)$$

$$2NiO + [-CF_2-CF_2-]_n \rightarrow 2NiF_2\uparrow + 2CO\uparrow \qquad (17)$$

$$4nCrO_3 + 3[-CF_2-CF_2-]_n \rightarrow 4nCrF_6\uparrow + 12CO\uparrow \qquad (18)$$

In the foregoing reactions, the symbol "$\uparrow$" indicates that the indicated element or compound is substantially gaseous at the reaction temperature. Persons skilled in this art will appreciate that $CaCl_2$, $CaF_2$, $FeCl_3$, $NiCl_2$, $CrCl_3$, $NiF_2$ and $CrF_6$ may only be partially gaseous at the normal reaction temperatures.

Improving of cutting properties of a regular iron-oxygen lance

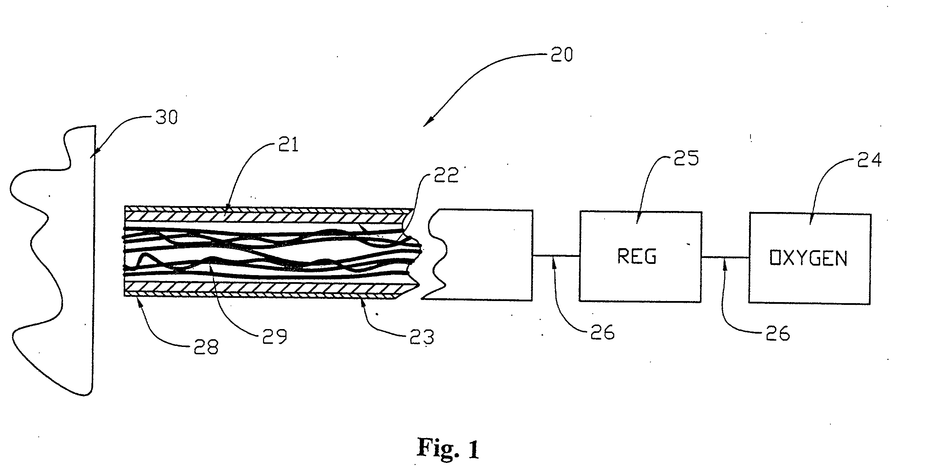

Referring now to the drawings, and, more particularly, to Fig. 1 thereof, an improved lance, generally indicated at 20, is shown as broadly including a horizontally-elongated iron or steel tube 21 having inner and outer cylindrical surfaces 22,23, respectively. This tube may be about 3 feet long, have an inside diameter of about 3/8", and a radial wall thickness of about 1/16". The rightward or proximal end of the tube is connected to a source 24 of oxygen or oxygen-rich gas through an intermediate flow regulator 25. Thus, oxidizer may flow form source 24 to the tube via the flow regulator and a conduit, portions of which are indicated at 26. The tube is formed of a fuel material, such as iron or a ferrous alloy. A sleeve, generally indicated at 28, surrounds the tube. This sleeve is formed of a material that contains chlorine (*e.g.*, polyvinyl chloride, chlorinated polyvinyl chloride, etc.) and/or fluorine (*e.g.*, polytetrafluoroethylene). A plurality of rods or wires, severally indicated at 29, are disposed within the tube to contribute additional reactant(s).

There are different sources of carbon for carbochlorination and carbofluorination reactions. One source of carbon could be a carbon jacket surrounding a regular commercial lance. The invention utilized a carbon tube with very thin walls, as well as layer of a graphoil surrounding the lance. The carbon serves as a focusing element. With a regular lance, the flame dissipates a lot of energy. With the carbon external shield the energy dissipation is lower. The explanation of this fact is straightforward. In a regular operation, the surrounding iron tube melts or is burned in synchronization with the flame propagation. However, with the carbon jacket, no melting occurs since the melting/sublimation point of carbon is around 4,000 °C. The carbon jacket can burn in oxygen. The burning process is apparently a little bit slower than the burning of iron material. Consequently, the unreacted carbon tube serves as an opening to the hot flame. Details of the experiment can be found in Examples 4-6.

The performance of the invention was tested on steel plates of thicknesses of 0.26" and 1.3", respectively, and on a concrete plate 4.2" thick. For the thin steel plate, there is no appreciable difference. This was not surprising since the heat-affected zone does not play an important role. However, with the thick plate, the difference is almost 100%.

The experiment with concrete slab revealed that there is no difference in rate of penetration of regular or focused lance. In a focused lance, the heat flux is much higher than in the regular lance. Nevertheless, the rate of penetration is almost the same. This is an experimental proof that the rate of cutting or drilling in concrete blocks is inversely related to the amount of lave-like material accumulating in the hole or cut. In other words, in a conventional lance, the rate of cutting slows as lava-like material accumulates in the hole or cut, and interferes with the continued cutting or drilling. Faster removal of such lava-like material will result in the improved performance of the torch. There appear to be several possibilities of increasing the rate of concrete blow-off: (a) higher linear velocity of the gas at the mouth of the torch, (b) lowering viscosity of the concrete melt by appropriate additions to the gas (*e.g.,* fluorides, as the resulting eutectic mixture has a lower melting point and a lower viscosity at the cutting temperature can be expected), and (c) converting the liquid concrete to gaseous components (carbochlorination).

Supplying gaseous chlorine along with gaseous oxygen to the hot combustion zone will guarantee the presence of chlorine at the reaction site. The resulting volatile chlorides of iron, silicon, aluminum and calcium will evaporate from the hot spot, and therefore the heat and mass transfer will be much higher. In addition, rebar (*e.g.*, ferrous reinforcing rod) in the concrete structure will not represent an obstacle, but rather increase the rate of penetration.

Example 1: Combustion in an "Iron-chlorinated/fluorinated Polymer-oxygen" System

The combustion system consists of a steel tube, a chlorinated/fluorinated polymer sleeve, and an excess of oxygen. The adiabatic temperature, evaluated from thermodynamic calculations, indicates that the combustion temperature in systems with chlorine or fluorine is always higher than in systems with oxygen alone. A typical difference amounts to 250-500 °C.

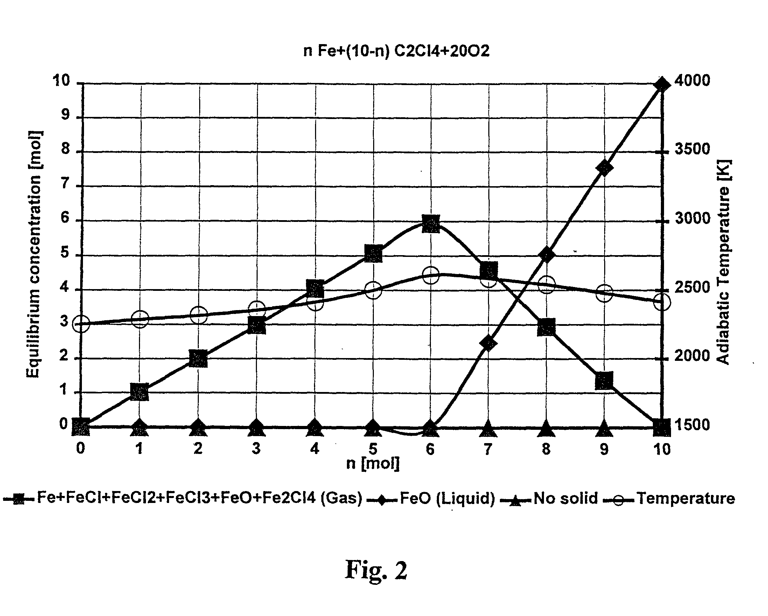

The dependence of adiabatic temperature on the composition of the mixture is given in Fig.2. Fig. 2 is a plot of equilibrium concentration (left ordinate) and adiabatic temperature (right ordinate) vs. concentrations (n) (abscissa) of lance-and-sleeve combinations of $[nFe + (10-n)C_2Cl_4 + 20O_2]$, for the reactions of Example 1. This figure shows that for concentrations of less than about 6 moles, the reaction products $Fe + FeCl + FeCl_2 + FeCl_3 + FeO + Fe_2Cl_{14}$ are substantially gaseous, and that the reaction temperatures are between about 2250 - 2650 °K.

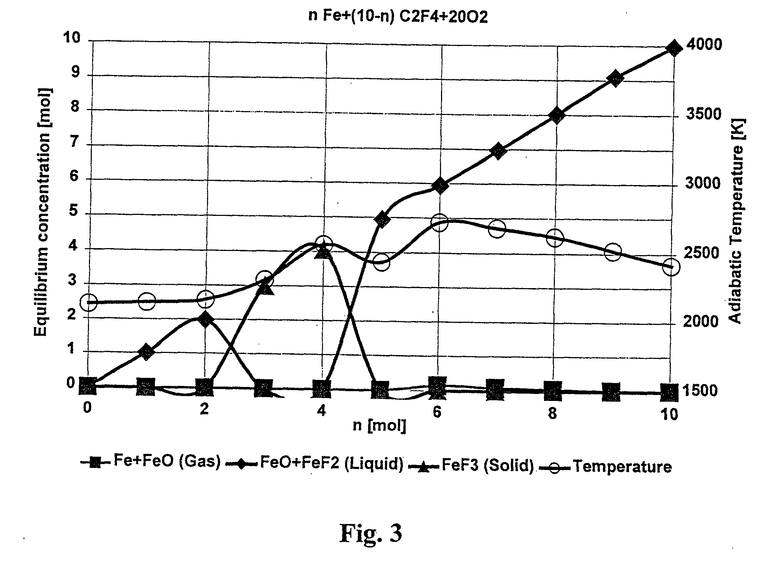

The composition of the combustion products is reported in Fig.3. Fig. 3 is a plot of equilibrium concentration (left ordinate) and adiabatic temperature (right ordinate) vs. concentrations (n) (abscissa) of lance-and-sleeve combinations of $[nFe + (10-n)C_2F_4 + 20O_2]$, for the reactions of Example 1. This plot shows that reaction products Fe + FEO are gaseous at concentrations in excess of n = 4 moles.

Example 2: Combustion in an "Titanium-Chlorinated/Fluorinated Polymer-Oxygen"system

The combustion system consists of a titanium tube, a chlorinated/fluorinated polymer sleeve, and an excess of oxygen. The adiabatic temperature, evaluated from thermodynamic calculations, indicates that the combustion temperature in systems with chlorine or fluorine is usually lower than in systems with oxygen alone. For example, for a system consisting of 5 moles of titanium and 25 moles of oxygen the combustion temperature is 3,100 °K; for a system with 5 moles of titanium, 20 moles of oxygen and 5 moles of $-C_2F_2-$ the temperature is 2,500 °K and for system of 5 moles of titanium, 20 moles of oxygen and 5 moles of $-C_2Cl_2-$ the temperature is 2,900 °K.

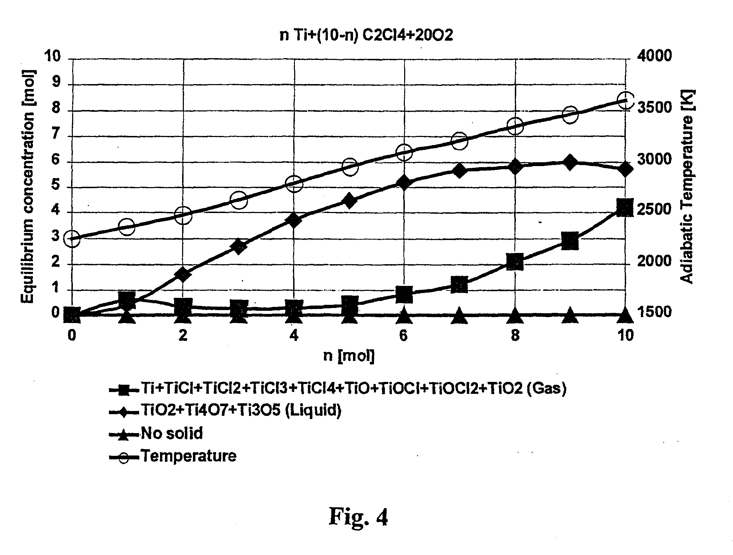

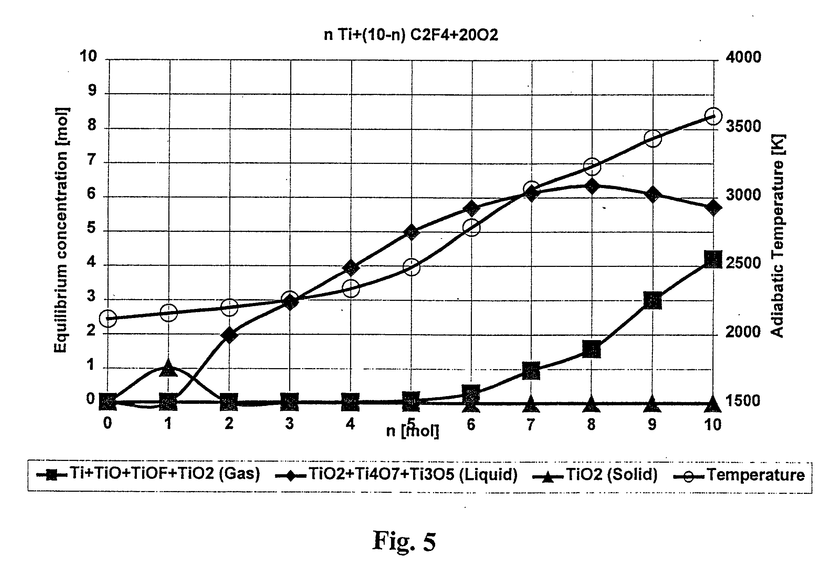

More details are presented in Figs. 4 and 5. Fig. 4 is a plot of equilibrium concentration (left ordinate) and adiabatic temperature (right ordinate) vs. concentrations (n) (abscissa) of lance-and-sleeve combinations of $[nTi + (10-n)C_2Cl_{14} + 20O_2]$ for the reactions of Example 2. Fig. 4 shows that reaction products $Ti + TiCl + TiCl_2 + TiCl_3 + TiCl_4 + TiO + TiOCl + TiOCl_2 + TiO_2$ are gaseous. Fig. 5 is a plot of equilibrium concentration (left ordinate) and adiabatic temperature (right ordinate) vs. concentrations (n) (abscissa) of lance-and-sleeve combinations of [nTi + (10-n)C2F4 + 20O2], for the reactions of Example 2. Fig. 5 shows that reaction products $Ti + TiO + TiOF + TiO_2$ are gaseous.

Example 3: Combustion in an "Aluminum-Chlorinated/Fluorinated Polymer-Oxygen" System

The combustion system consists of an aluminum tube, a chlorinated/fluorinated polymer sleeve, and excess of oxygen. The adiabatic temperature, evaluated from thermodynamic calculations, indicates that the combustion temperature in systems with chlorine or fluorine is close to that in systems with oxygen alone. The combustion temperature in these systems can be well above 3,000 °K.

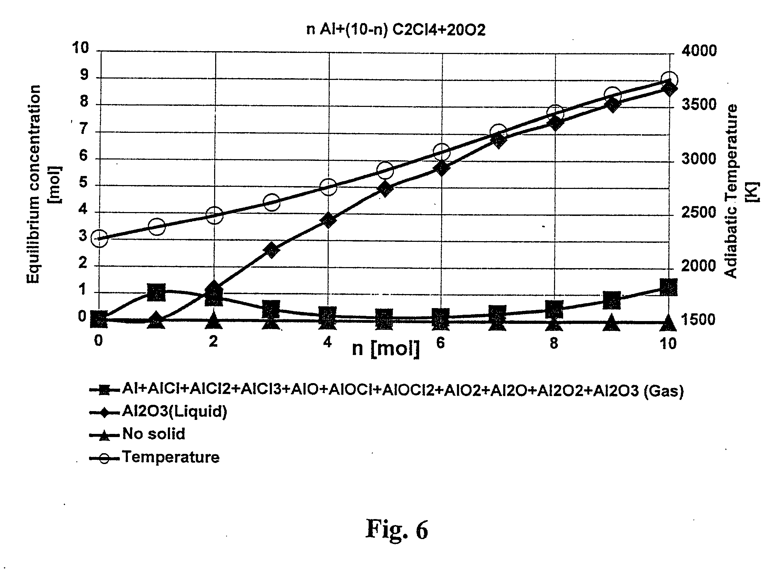

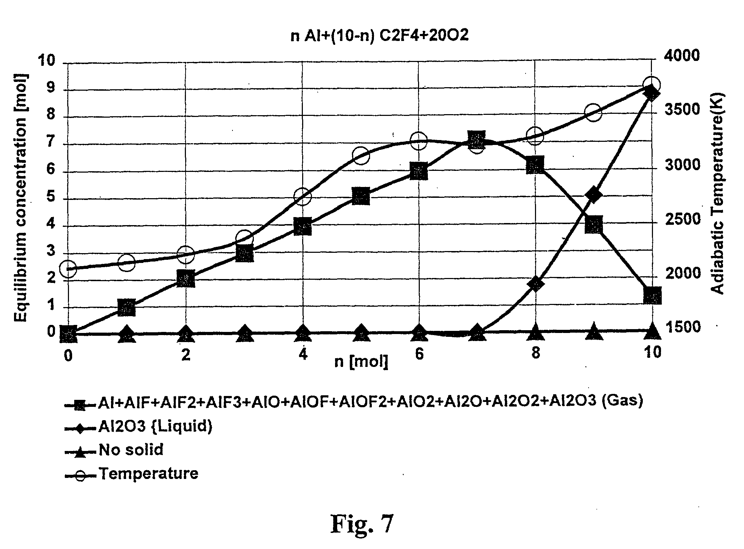

Additional details are shown in Figs. 6 and 7. Fig. 6 is a plot of equilibrium concentration (left ordinate) and adiabatic temperature (right ordinate) vs. concentrations (n) (abscissa) of lance-and sleeve combinations of $[nAl + (10-n)C_2Cl_4 + 20O_2]$, for the reactions of Example 3. This plot shows that $Al + AlCl + AlCl_2 + AlCl_3 + AlO + AlOCl + AlOCl_2 + AlO_2 + Al_2O + Al_2O_2 + Al_2O_3$ are gaseous. Fig. 7 is a plot of equilibrium concentration (left ordinate) and adiabatic temperature (right ordinate) vs. concentrations (n) (abscissa) of lance-and-sleeve combinations of $[nAl + (10-n)C_2F_4 + 20O_2]$, for the reactions of Example 3. This plot shows that $Al + AlF + AlF_2 + AlF_3 + AlO + AlOF + AlOF_2 + AlO_2 + Al_2O + Al_2O_2 + Al_2O_3$ are gaseous.

Example 4: External Carbon Tube as a Focusing Element

A standard lance " iron-oxygen " is represented by an iron pipe with an array of iron wires inside. Oxygen gas is blown through this arrangement. This assembly has been inserted in a carbon tube. Carbon reacts with oxygen and liberates large amount of heat. Adiabatic temperature of carbon combustion in pure oxygen is above 4000 °C. Carbon is also focusing the flame and less heat is dissipated to the environment.

An iron plate (thickness = 1.3", length = 6.0") was cut by a regular commercial lance in 76 seconds; the cutting rate was 0.20 cm/sec. The same plate was cut by a modified lance with external carbon shield in 43 seconds. The cutting rate increased to 0.38 cm/sec. As an external carbon shield a layer of graphoil material was used.

Example 5: Carbofluorination Piercing of Concrete Slabs

This example illustrates that using fluorine containing materials improves the efficiency, cutting speed, consumption of oxygen and consumption of the cutting lance essentially.

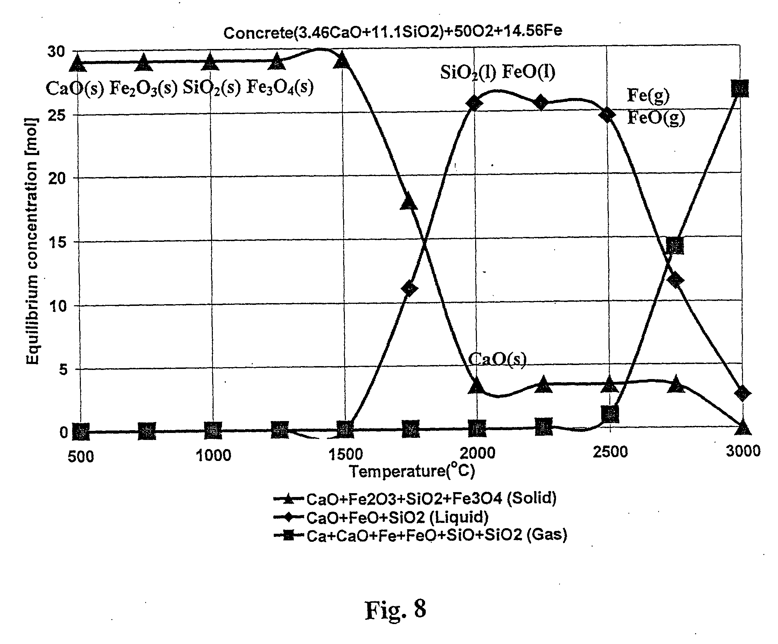

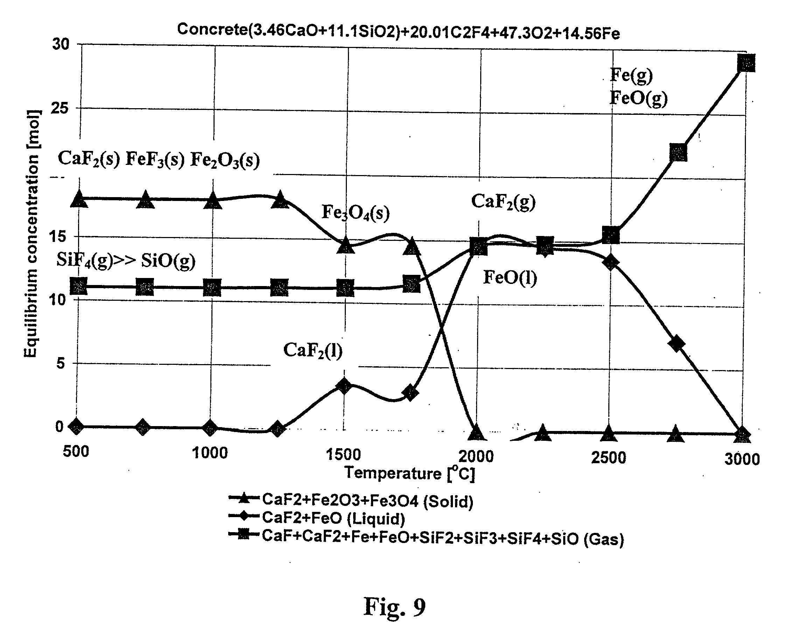

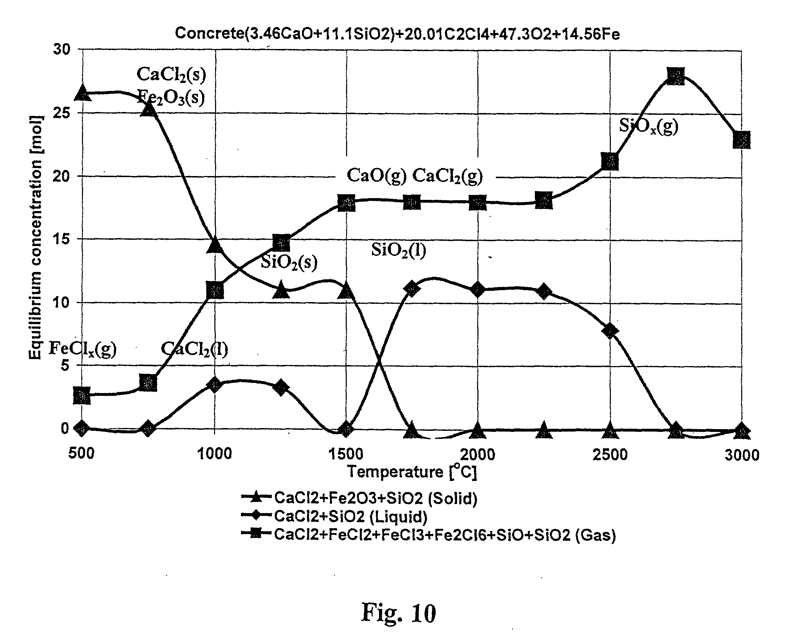

Experimental data for the cutting experiment are reported in Table 1, and in Figs 8-10. Fig.8 is a plot of equilibrium concentration (ordinate) vs. temperature (abscissa) for $[concrete(3.46CaO + 11.1 SiO_2) + 50O_2 + 14.56Fe]$, for the reactions of Example 5. This plot shows that $Ca + CaO + Fe + FeO + SiO + SiO_2$ are gaseous. Fig. 9 is a plot of equilibrium concentration (ordinate) vs. temperature (abscissa) for $[concrete(3.46CaO + 11.1SiO_2) + 20.01C_2F_4 + 46.3O_2 + 14.56Fe]$, for the reactions shown in Example 5. This plot shows that $CaF + CaF_2 + Fe + FeO + SiF_2 + SiF_3 + SiF_4 + SiO$ are gaseous. Fig. 10 is a plot of equilibrium concentration (ordinate) vs. temperature (abscissa) for $[concrete(3.46CaO + 11.1SiO_2) + 20.01C_2Cl_4 + 47.3O_2 + 14.56Fe]$, for the reactions of Example 5. This plot shows that $CaCl_2 + FeCl_3 + Fe_2Cl_6 + SiO + SiO_2$ are gaseous.

Example 6: Carbofluorination Piercing of Concrete Slabs

This example provides additional experimental observations on superiority of using fluorinated materials against concrete materials.

Experimental data for the cutting experiment are reported in the Table 2. Concrete block (thickness = 15.0 cm). Note: Hole piercing was completed when penetration was achieved. Number of lances burned is indicated in second column.

Example 7: Carbofluorination Piercing of Concrete Slabs

This example compares modified lances against concrete walls of different thickness.

| 1st Concrete Block (thickness = 6.0 cm) | | |
|---|---|---|
| Type of Lance | Time(s) | Length Burned (inches) |
| BROCO | 51.81 | 24.0 |
|  | 64.18 | 28.0 |
| BROCO with Fe tubing | 32.81 | 14.0 |
|  | 35.44 | 15.0 |
| FEP | 45.46 | 19.5 |
| FEP with Fe tubing | 25.13 | 8.5 |
| PTFE | 30.63 | 14.0 |
| PTFE with Fe tubing | 26.79 | 10.0 |
| TFE extruded | No penetration | - |
| PFA | 15.10 | 9.0 |
| KYNAR | 48.71 | 18.5 |
| 2nd Concrete Block (thickness = 7.5 cm) | | |
| KYNAR | No penetration | 25.0 |
| PFA | 37.87 | 15.0 |
| PTFE | 50.35 | 20.0 |
| PTFE with Fe tubing | 31.02 | 12.5 |
| FEP | 37.84 | 16.0 |
| FEP with Fe tubing | 30.01 | 11.0 |
| BROCO | No penetration | 27.5 |
| BROCO with Fe tubing | 43.45 | 19.5 |
| 3rd Concrete Block (thickness = 9.8 cm) | | |
| BROCO | No penetration | 28.5 |
|  | No penetration | 28.5 |
| BROCO with Fe tubing | No penetration | 27.0 |

| 1st Concrete Block (thickness = 6.0 cm) | | |
|---|---|---|
| Type of Lance | Time(s) | Length Burned (inches) |
| PTFE | No penetration | 26.0 |
| | No penetration | 29.5 |
| FEP with Fe tubing | 46.85 | 18.0 |
| PEP | 67.70 | 26.0 |
| | 60.99 | 25.0 |
| FEP with Fe tubing | 38.36 | 15.0 |
| PFA | 43.66 | 18.0 |
| | 42.57 | 16.5 |

When BROCO is modified with FEP tubing, the pierce rate was increased by more than 90% (*i.e.*, from 0.073 to 0.139 cm/sec). When BROCO was modified with FEP tubing, the lance burning rate decreased by more than 10% (*i.e.*, from 1.373 to 1.207 cm/sec). When BROCO was modified with FEP tubing, the oxygen consumption needed for piercing a 15 cm deep hole decreased by more than 45% (*i.e.*, from 275.28 to 144.67 liters).

Example 8: Carbofluorination Piercing of Granite Slabs

Piercing of 0.75 inch thick granite slab by the FEP lance took only 7 sec. of cutting time. Obviously, since granite components are basically silica and alumina both were converted to gaseous products in the course of penetration.
Granite objects are ideal targets for a very fast piercing by a modified lance

Example 9: Graphoil Wrap/Aluminum Wires

Improved cutting/piercing of cutting of iron slabs by using graphoil wrap as focusing element and using aluminum wires to increase the penetration efficiency
Graphoil layer on the surface of the lance is capable of sharp focusing of the exit hot flame and substantially contributes toward a better performance of the lance. In addition a combination of aluminum and iron wires along with graphoil wrap provides additional improvement of the cutting efficiency.
The following lances were used in this experiment: (1) BROCO lance (3/8", linear density = 3.933 g/cm); (2) BROCO lance (3/8") covered by graphoil (thickness = 0.015", width = 1.5", linear density = 0.156 g/cm); (3) aluminum lance (3/8") made from Al tubing (OD = 3/8"; wall thickness = 0.035", 6061, linear density = 0.648 g/cm) and 7 BROCO Fe wires covered by graphoil (thickness - 0.010") fixed with epoxy glue.
Experimental data for the cutting experiment are reported in Table 3.

Example 10: Carbochlorination Piercing of Concrete Slabs

Experimental conditions: oxygen outlet pressure = 80 psi; flow = 80 liters per minute, experiments with concrete block (thickness = 15 cm).
The experiment used three types of lances: (1) BROCO lance (3/8") covered by a fluorinated ethylene propylene (FEP) resin - ID = 3/8", wall thickness = 1/16", linear density =1.2249 g/cm) and 10" long Fe tubing (OD = 0.625", linear density = 3.37 g/cm); (2) BROCO lance (3/8") covered by a chlorinated Teflon® resin - ID = 3/8", wall thickness = 1/16", linear density =1.2234 g/cm, Laird Plastics, Inc.) and 10" long Fe tubing (OD = 0.625", linear density = 3.37 g/cm); and (3) BROCO lance (3/8") covered by foil of chlorinated Teflon® resin - linear density =1.3205 and 1.2885 g/cm, Honeywell.

Experimental data for the cutting experiment are reported in Table 4.

Therefore, while presently-preferred forms of the inventive high-speed chemical drill have been shown and described, and several modifications thereof discussed, persons skilled in this art will readily appreciate that various additional changes and modifications may be made without departing from the spirit ofthe invention, as defined ad differentiated by the following claims.

| Table 1 / SHEET 1 | | | | | | | | | | |
|---|---|---|---|---|---|---|---|---|---|---|
| Type of Lance | Time Needed to Make a 15 cm Hole (sec) | Length of Lance Burned (cm) | O₂ Needed for the Run (@ 80 l/min) (liters) | Pierce Rate (cm/sec) | Lance Burning Rate (cm/sec) | Material Burned | | | | Molar ratio |
| | | | | | | Fe | | C₂F₄ | | Lance: O₂ |
| | | | | | | g | mol | g | mol | Mol/mol |
| BROCO | 187.38 | 246.38 | 249.8 | 0.080 | 1.315 | 969 | 17.4 | - | - | 1.55 |
| | 183.60 | 241.30 | 244.8 | 0.082 | 1.314 | 949 | 17.0 | - | - | 1.56 |
| (avg) | **185.49** | **243.84** | **247.3** | **0.081** | **1.315** | **959** | **17.2** | **-** | **-** | **1.56** |
| BROCO with FEP | 120.51 | 129.54 | 160.7 | 0.124 | 1.075 | 509 | 9.1 | 78 | 0.8 | 1.38 |
| | 110.20 | 147.32 | 146.9 | 0.136 | 1.337 | 579 | 10.4 | 89 | 0.9 | 1.72 |
| | 109.79 | 121.92 | 145.1 | 0.138 | 1.121 | 480 | 8.6 | 74 | 0.7 | 1.44 |
| | 114.67 | 132.08 | 152.9 | 0.131 | 1.152 | 519 | 9.3 | 80 | 0.8 | 1.48 |
| (avg) | **113.54** | **132.72** | **151.4** | **0.132** | **1.169** | **522** | **9.3** | **80** | **0.8** | **1.49** |
| BROCO with Fe tubing | 149.93 | 187.96 | 199.9 | 0.100 | 1.254 | 1316 | 23.6 | - | - | 2.64 |

12

| Type of Lance | Time Needed to Make a 15 cm Hole (sec) | Length of Lance Burned (cm) | $O_2$ Needed for the Run (@ 80 l/min) (liters) | Pierce Rate (cm/sec) | Lance Burning Rate (cm/sec) | Material Burned | | | | Molar ratio |
|---|---|---|---|---|---|---|---|---|---|---|
| | | | | | | Fe | | $C_2F_4$ | | Lance: $O_2$ |
| | | | | | | g | mol | g | mol | Mol/mol |
| BROCO with FEP and Fe tubing | 76.81 | 71.12 | 102.4 | 0.195 | 0.926 | 498 | 8.9 | 43 | 0.4 | 2.03 |
| | 81.20 | 83.82 | 108.3 | 0.185 | 1.032 | 587 | 10.5 | 51 | 0.5 | 2.28 |
| | 73.10 | 81.28 | 97.5 | 0.205 | 1.112 | 569 | 10.2 | 49 | 0.5 | 2.46 |
| (avg) | 77.04 | 78.74 | 102.7 | 0.195 | 1.022 | 551 | 9.9 | 47 | 0.4 | 2.25 |

Table 1 / SHEET 2

EP 1 262 268 A1

| Type of Lance | Time Needed to Make a 15 cm Hole (sec) | Length of Lance Burned (cm) | O$_2$ Needed for the Run (@ 80 l/min) (liters) | Pierce Rate (cm/sec) | Lance Burning Rate (cm/sec) | Material Burned | | | | Molar ratio Lance: O$_2$ |
|---|---|---|---|---|---|---|---|---|---|---|
| | | | | | | Fe | | C$_2$F$_4$ | | |
| | | | | | | g | mol | g | mol | Mol/mol |
| BROCO | 214.65 | 292.10 | 286.20 | 0.070 | 1.361 | 1149 | 20.6 | - | - | 1.61 |
| | 183.60 | 279.40 | 244.80 | 0.082 | 1.522 | 1099 | 19.7 | - | - | 1.80 |
| | 221.13 | 273.05 | 294.84 | 0.068 | 1.235 | 1074 | 19.2 | - | - | 1.46 |
| (avg) | 206.46 | 281.52 | 275.28 | 0.073 | 1.373 | 1107 | 19.8 | - | - | 1.62 |
| BROCO with FEP tubing | 111.11 | 129.54 | 148.10 | 0.135 | 1.166 | 509 | 9.1 | 78 | 0.8 | 1.50 |
| | 118.13 | 149.86 | 157.50 | 0.127 | 1.269 | 589 | 10.6 | 90 | 0.9 | 1.64 |
| | 96.30 | 114.30 | 128.40 | 0.156 | 1.187 | 450 | 8.0 | 69 | 0.7 | 1.52 |
| (avg) | 108.51 | 131.23 | 144.67 | 0.139 | 1.207 | 516 | 9.2 | 79 | 0.8 | 1.55 |

Table 2 / SHEET 1

| | | | | | | Material Burned | | | | Molar ratio |
| Type of Lance | Time Needed to Make a 15 cm Hole (sec) | Length of Lance Burned (cm) | $O_2$ Needed for the Run (@ 80 l/min) (liters) | Pierce Rate (cm/sec) | Lance Burning Rate (cm/sec) | Fe | | $C_2F_4$ | | Lance : $O_2$ |
|---|---|---|---|---|---|---|---|---|---|---|
| | | | | | | g | mol | g | mol | Mol/mol |
| BROCO with two FEP tubings | 121.15 | 134.62 | 161.53 | 0.124 | 1.111 | 529 | 9.5 | 169 | 1.7 | 1.55 |
| | 119.06 | 144.78 | 158.75 | 0.126 | 1.216 | 569 | 10.2 | 182 | 1.8 | 1.69 |
| | 88.60 | 93.98 | 118.13 | 0.169 | 1.061 | 370 | 6.6 | 118 | 1.2 | 1.48 |
| (avg) | **109.60** | **124.46** | **146.14** | **0.140** | **1.129** | **489** | **8.8** | **156** | **1.6** | **1.59** |
| BROCO with KYNAR tubing | 104.24 | 100.33 | 138.99 | 0.144 | 0.962 | 395 | 7.1 | 92 | 0.9 | 1.29 |
| | 91.84 | 88.90 | 122.45 | 0.163 | 0.968 | 350 | 6.3 | 81 | 0.8 | 1.30 |
| | 96.28 | 105.41 | 128.37 | 0.156 | 1.095 | 415 | 7.4 | 96 | 1.0 | 1.47 |
| | 84.76 | 76.20 | 113.01 | 0.177 | 0.899 | 300 | 5.4 | 70 | 0.7 | 1.21 |

Table 2 / SHEET 2

| Type of Lance | Time Needed to Make a 15 cm Hole (sec) | Length of Lance Burned (cm) | $O_2$ Needed for the Run (@ 80 l/min) (liters) | Pierce Rate (cm/sec) | Lance Burning Rate (cm/sec) | Material Burned | | | | Molar ratio |
|---|---|---|---|---|---|---|---|---|---|---|
| | | | | | | Fe | | $C_2F_4$ | | Lance: $O_2$ |
| | | | | | | g | mol | g | mol | Mol/mol |
| | 85.12 | 100.33 | 113.49 | 0.176 | 1.179 | 395 | 7.1 | 92 | 0.9 | 1.58 |
| (avg) | 92.45 | 94.23 | 123.26 | 0.163 | 1.021 | 371 | 6.6 | 86 | 0.9 | 1.36 |
| BROCO with PTFE tubing | 172.72 | 158.75 | 230.29 | 0.087 | 0.919 | 624 | 11.2 | 182 | 1.8 | 1.26 |

Table 2 / SHEET 3

EP 1 262 268 A1

| Type of Lance | Length of Cut (cm) | Length of Lance Burned (cm) | O₂ Needed for the Run (@ 235 l/min) (liters) | Cutting Rate (cm/sec) | Lance Burning Rate (cm/sec) | Material Burned | | | | Molar ratio Lance: O₂ |
|---|---|---|---|---|---|---|---|---|---|---|
| | | | | | | Fe | | C₂F₁ | | Lance: O₂ |
| | | | | | | g | mol | g | mol | Mol/mol |
| Table 3 / SHEET 1 | | | | | | | | | | |
| Outlet Pressure = 50 psi; Oxygen Flow= 235 l/min; Steel Plate; Thickness = 2.5cm | | | | | | | | | | |
| BROCO | 24.0 | 35.0 | 87.3 | 0.609 | 0.889 | 138 | 2.46 | - | - | 0.358 |
| BROCO + graphoil | 24.0 | 25.5 | 135.2 | 0.695 | 0.739 | 100 | 1.80 | - | - | 0.298 |
| BROCO | 23.0 | 32.5 | 136.9 | 0.658 | 0.930 | 128 | 2.29 | - | - | 0.375 |
| BROCO | 24.5 | 35.5 | 152.4 | 0.630 | 0.912 | 140 | 2.50 | - | - | 0.368 |
| BROCO + graphoil | 23.0 | 28.0 | 139.6 | 0.645 | 0.786 | 110 | 1.97 | - | - | 0.316 |
| Outlet Pressure=50 psi; Oxygen Flow=235 l/min; Steel Plate; Thickness=7.0cm | | | | | | | | | | |
| BROCO | 7.0 | 56 | 289.3 | 0.095 | 0.758 | 220 | 3.94 | - | - | 0.305 |
| BROCO + graphoil | 9.5 | 40.5 | 222.9 | 0.169 | 0.721 | 159 | 2.85 | - | - | 0.287 |
| BROCO | 8.5 | 65 | 309.1 | 0.108 | 0.824 | 256 | 4.58 | - | - | 0.332 |

| Type of Lance | Length of Cut (cm) | Length of Lance Burned (cm) | O₂ Needed for the Run (@ 235 l/min) (liters) | Cutting Rate (cm/sec) | Lance Burning Rate (cm/sec) | Material Burned | | | | Molar ratio Lance: O₂ |
|---|---|---|---|---|---|---|---|---|---|---|
| | | | | | | Fe | | $C_2F_4$ | | Lance: O₂ |
| | | | | | | g | mol | g | mol | Mol/mol |
| BROCO + graphoil | 10.0 | 37.5 | 235.4 | 0.166 | 0.624 | 147 | 2.64 | - | - | 0.251 |
| Outlet Pressure=80 psi; Oxygen Flow=80 l/min; Steel Plate; Thickness=1.1 cm | | | | | | | | | | |
| BROCO | 26.0 | 34.5 | 49.8 | 0.696 | 0.924 | 136 | 2.43 | - | - | 1.093 |
| BROCO + graphoil | 26.0 | 13.5 | 40.7 | 0.851 | 1.097 | 53 | 0.95 | - | - | 0.523 |
| Al + 7 Fe wire + graphoil (A) | 25.0 | 28.5 | 45.2 | 0.738 | 0.841 | 86 | 1.54 | - | - | 0.764 |
| BROCO | 26.0 | 30.0 | 44.4 | 0.779 | 0.899 | 118 | 2.11 | - | - | 1.066 |
| BROCO + graphoil (A) | 25.5 | 26.5 | 37.4 | 0.909 | 0.945 | 104 | 1.87 | - | - | 1.117 |

Table 3 / SHEET 2

| Type of Lance | Length of Cut (cm) | Length of Lance Burned (cm) | O₂ Needed for the Run (@ 235 l/min) (liters) | Cutting Rate (cm/sec) | Lance Burning Rate (cm/sec) | Material Burned | | | | Molar ratio |
|---|---|---|---|---|---|---|---|---|---|---|
| | | | | | | Fe | | $C_3F_4$ | | Lance: $O_2$ |
| | | | | | | g | mol | g | mol | Mol/mol |
| Al + 7 Fe wire + graphoil | 25.5 | 37.0 | 44.7 | 0.760 | 1.103 | | | - | - | 1.003 |
| BROCO | 26.0 | 30.0 | 39.9 | 0.868 | 1.002 | 118 | 2.11 | - | - | 1.186 |
| Al + 7 Fe wire + graphoil (B) | 26.0 | 22.5 | 35.76 | 0.969 | 0.839 | 68 | 1.22 | - | - | 0.684 |
| Al + 7 Fe wire + graphoil (B) | 26.0 | 26.0 | 34.7 | 1.124 | 1.124 | 79 | 1.41 | - | - | 0.908 |
| Outlet Pressure=80 psi; Oxygen Flow= 80 l/min; Steel Plate; Thickness=5.7cm | | | | | | | | | | |

Table 3 / SHEET 3

EP 1 262 268 A1

19

**Table 3 / SHEET 4**

| Type of Lance | Length of Cut (cm) | Length of Lance Burned (cm) | O₂ Needed for the Run (@235 l/min) (liters) | Cutting Rate (cm/sec) | Lance Burning Rate (cm/sec) | Material Burned | | | | Molar ratio Lance: O₂ |
|---|---|---|---|---|---|---|---|---|---|---|
| | | | | | | Fe | | C₂F₄ | | Lance: O₂ |
| | | | | | | g | mol | g | mol | Mol/mol |
| Al + 7 Fe wire + graphoil (B) | 7.5 | 34.0 | 51.6 | 0.194 | 0.878 | 103 | 1.84 | - | - | 0.799 |
| BROCO | 5.5 | 46.0 | 76.6 | 0.096 | 0.801 | 181 | 3.24 | - | - | 0.947 |

| Type of Lance | Time Needed to Make a 15 cm Hole (sec) | Length of Lance Burned (cm) | O₂ Needed for the Run (@ 80 l/min) (liters) | Pierce Rate (cm/sec) | Lance Burning Rate (cm/sec) | Material Burned | | | | Molar ratio |
|---|---|---|---|---|---|---|---|---|---|---|
| | | | | | | Fe | | C₂F₄ | | Lance: O₂ |
| | | | | | | g | mol | g | mol | Mol/mol |
| BROCO | 194.88 | 258.5 | 259.84 | 0.077 | 1.326 | 1017 | 18.2 | - | - | 1.57 |
| BROCO + PCTFE + FE (10") | 88.4 | 84.0 | 117.87 | 0.170 | 0.950 | 381 | 6.8 | 102 | 1.0 | 1.48 |
| BROCO + PCTFE (foil) | 105.31 | 104.0 | 140.41 | 0.142 | 0.988 | 459 | 8.3 | 127 | 1.3 | 1.53 |
| BROCO + PCTFE + Fe (10") | 99.93 | 95.0 | 133.24 | 0.150 | 0.951 | 424 | 7.5 | 116 | 1.2 | 1.46 |

**Claims**

1.  A chemical drill for removing portions of a target material, comprising:

    an elongated tube formed of a fuel material;
    a source of oxidizer;
    a conduit for establishing a controllable flow of oxidizer from said source through said tube; and
    a sleeve formed of a material containing chlorine and/or fluorine mounted on said tube;
    whereby, when said drill is ignited and used to remove portions of a target material, the chlorine and/or fluorine in said sleeve material will react chemically with the target material to form gaseous reaction products.

2.  A chemical drill as set forth in claim 1 wherein said sleeve is mounted on the outer surface of said tube.

3.  A chemical drill as set forth in claim 1 and further comprising a plurality of wires in said tube.

4.  A chemical drill as set forth in claim 1 and further comprising a plurality of rods in said tube.

5.  A chemical drill as set forth in claim 1 wherein said sleeve material contains polyvinyl chlorine.

6.  A chemical drill as set forth in claim 1 wherein said sleeve material contains polytetrafluoroethylene.

7.  A chemical drill as set forth in claim 1 wherein said sleeve material contains chlorinated polyvinyl chlorine.

8.  A chemical drill as set forth in claim 1 wherein tube contains iron.

9.  A chemical drill as set forth in claim 1 wherein said target material contains a ferrous alloy.

10. A chemical drill as set forth in claim 1 wherein said target material contains an alloy having an element selected from the group consisting of aluminum, copper, magnesium, titanium, a transition metal, tungsten, nickel, cobalt and chromium.

11. A chemical drill as set forth in claim 1 wherein said target material is selected from the group consisting of concrete, reinforced concrete, aluminum oxide, silicon oxide, calcium oxide, and brick.

12. A chemical drill as set forth in claim 1 wherein said target material includes a ceramic material selected from the group consisting of alumina, silica, zirconia, magnesia, silicon carbide and silicon nitride.

EP 1 262 268 A1

**Fig. 1**

**n Fe+(10-n) C2Cl4+20O2**

Fig. 2

EP 1 262 268 A1

Fig. 3

Fig. 4

Fig. 5

Fig. 6

Fig. 7

Concrete(3.46CaO+11.1SiO2)+50O2+14.56Fe

Fig. 8

Concrete(3.46CaO+11.1SiO2)+20.01C2F4+47.3O2+14.56Fe

Fig. 9

EP 1 262 268 A1

Fig. 10

EP 1 262 268 A1

European Patent Office

**EUROPEAN SEARCH REPORT**

Application Number

EP 02 25 3742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | US 4 182 947 A (J.S. BROWER) 8 January 1980 (1980-01-08) * column 2, line 31 – column 5, line 14; figures 1-5 * | 1,2,4,5, 8-11 | B23K7/08 E21B7/14 E21B29/02 |
| A | DE 810 610 C (ADOLF MESSER GMBH) 13 August 1951 (1951-08-13) * the whole document * | 1,2,5,7, 8,11 | |
| A,D | US 4 477 060 A (L.A. MOLINDER) 16 October 1984 (1984-10-16) * column 3, line 1-15 * * column 3, line 44 – column 4, line 24; figures 1,5 * | 1,3,8,9, 11 | |
| A,D | US 5 575 331 A (J.B. TERRELL) 19 November 1996 (1996-11-19) * column 9, line 53 – column 10, line 21; figure 1 * | 1 | |
| | | | TECHNICAL FIELDS SEARCHED (Int.Cl.7) B23K E21B C21C |

The present search report has been drawn up for all claims

| Place of search | Date of completion of the search | Examiner |
|---|---|---|
| MUNICH | 4 September 2002 | Jeggy, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 262 268 A1

## ANNEX TO THE EUROPEAN SEARCH REPORT
## ON EUROPEAN PATENT APPLICATION NO.

EP 02 25 3742

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2002

| Patent document cited in search report | | Publication date | Patent family member(s) | | Publication date |
|---|---|---|---|---|---|
| US 4182947 | A | 08-01-1980 | US | 4069407 A | 17-01-1978 |
| | | | BE | 854976 A1 | 24-11-1977 |
| | | | CA | 1076655 A1 | 29-04-1980 |
| | | | DE | 2725643 A1 | 10-08-1978 |
| | | | DK | 269877 A | 05-08-1978 |
| | | | FR | 2379347 A1 | 01-09-1978 |
| | | | IT | 1079644 B | 13-05-1985 |
| | | | MX | 144360 A | 05-10-1981 |
| | | | NL | 7704360 A | 08-08-1978 |
| | | | NL | 8501675 A ,B, | 01-10-1985 |
| | | | NO | 771282 A ,B, | 07-08-1978 |
| DE 810610 | C | 13-08-1951 | NONE | | |
| US 4477060 | A | 16-10-1984 | DE | 3141583 A1 | 26-05-1983 |
| | | | AU | 556392 B2 | 30-10-1986 |
| | | | AU | 9052082 A | 05-05-1983 |
| | | | BR | 8207890 A | 30-08-1983 |
| | | | CA | 1194777 A1 | 08-10-1985 |
| | | | DE | 3269666 D1 | 10-04-1986 |
| | | | DK | 101383 A ,B, | 28-04-1983 |
| | | | WO | 8301480 A1 | 28-04-1983 |
| | | | EP | 0091463 A1 | 19-10-1983 |
| | | | ES | 516688 D0 | 01-07-1983 |
| | | | ES | 8307148 A1 | 16-10-1983 |
| | | | JP | 58501778 T | 20-10-1983 |
| | | | MX | 156667 A | 22-09-1988 |
| | | | NO | 832199 A | 17-06-1983 |
| | | | NO | 154868 B | 29-09-1986 |
| | | | NZ | 202201 A | 31-05-1985 |
| | | | PH | 19187 A | 23-01-1986 |
| | | | SU | 1238725 A3 | 15-06-1986 |
| US 5575331 | A | 19-11-1996 | NONE | | |

EPO FORM P0459

For more details about this annex : see Official Journal of the European Patent Office, No. 12/82

34